# EUROPEAN PATENT SPECIFICATION

(11) **EP 2 162 819 B1**
(45) Date of publication and mention of the grant of the patent: **09.08.2017**
(21) Application number: 08775806.6
(22) Date of filing: 30.06.2008
(51) Int. Cl.: G06F 3/12, G06F 17/24

(54) **IMPROVEMENTS IN OR RELATING TO MARKING AND/OR CODING**
VERBESSERUNGEN BEI ODER IM ZUSAMMENHANG MIT MARKIERUNGEN UND/ODER CODIERUNGEN
AMÉLIORATIONS DANS OU RELATIVES À UN MARQUAGE ET/OU CODAGE

(30) Priority: 30.06.2007 GB 0712738
(43) Date of publication of application: 17.03.2010
(73) Proprietor: Domino Printing Sciences PLC, Cambridge CB23 8TU (GB)
(72) Inventor: DAVIS, Darren, Cambridge PE27 3HW (GB); EDGAR, Cameron Robert, Cambridge PE28 3LF (GB)
(74) Representative: Boult Wade Tennant
(86) International application number: PCT/GB2008/002256
(87) International publication number: WO 2009/004328

(56) References cited:
- EP-A- 0 814 425
- EP-A- 0 860 790
- EP-A- 1 607 229
- US-A1- 2003 189 727
- US-A1- 2004 240 920

## Description

### Field of the Invention

This invention relates to marking and/or coding and has been developed, in particular, for application to industrial and/or commercial marking and coding equipment. Hereinafter the term marking will be used to cover both marking and coding.

### Background to the Invention

Industrial marking and coding equipment is a well-known art. Articles carried on a moving line are displaced past a station at which a mark is applied thereto by the marking and coding equipment. Typically the mark is applied by an inkjet process of some type (such as continuous inkjet printing), or by a laser (such as laser printing).

The mark will be referred to hereinafter as a message. As will be well known a message may comprise a string of characters, typically numbers, letters or a combination of letters and numbers, although other symbols may be used too. Further, a message may comprise both fixed (predetermined) and variable data. By way of example, a typical message is of the format: BEST BEFORE 10 MAY 2007. The BEST BEFORE part of the message is fixed but the 10 MAY 2007 part will vary according to the date on which the message is applied.

The above-described industrial and coding equipment is often referred to by the term "primary coding printer". Additionally, such industrial and coding equipment is often referred to by the term "product-identification printer", although it will be appreciated that the mark/message applied by a product-identification printer to an article need not be a mark/message that actually identifies that article but may, as described above, be any other type of message (such as a message indicating a date by which the article should be used or consumed).

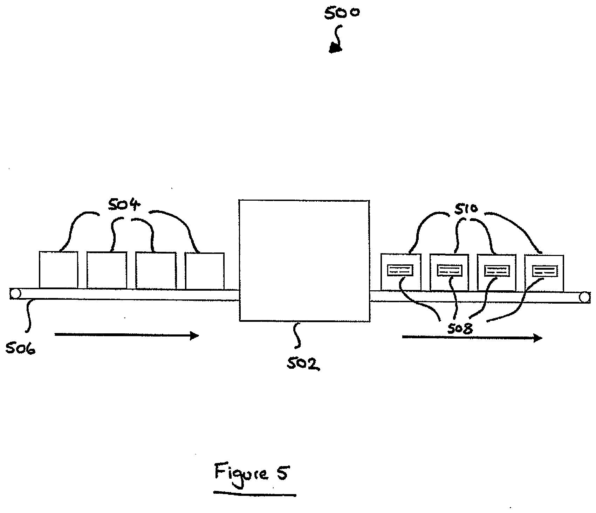

Figure 5 of the accompanying drawings schematically illustrates a system 500 using a product-identification printer 502. Unmarked articles 504 are moved towards the product-identification printer 502 (for example, via a transportation or conveyor arrangement 506). The product-identification printer 502 applies/prints a mark/message 508 on the unmarked articles 504 to produce marked articles 510. It will be appreciated, however, that other arrangements/configurations for applying messages to articles may be used.

Currently messages can only be formatted according to preset templates programmed into a printer. However there is an increasing demand for more flexible and dynamic messages, particularly in product identification and track and trace applications.

It is an object of this invention to provide a method and/or apparatus which will go at least some way in addressing the aforementioned demand; or which will at least offer a novel and useful alternative.

In United States Patent Application Publication US2003/0189727, there is described a method and apparatus for organizing a Variable Data Print job containing a plurality of documents that are to be printed. Each of said plurality of documents being defined by a plurality of variants that include elements related to content, layout and product intent, herein at least a portion of the plurality of documents each contain a Field of Data having information specific to that document; selecting at least one parameter from the Field of Data and creating a plurality of groups in accordance with the parameter, and arranging the groups for printing in accordance to the parameter.

In United States Patent Application Publication US2004/0240920, there is described a printing apparatus for printing images based on image data.

### Summary of the Invention

Various aspects and embodiments of the present invention are set out in the appended claims.

There is described a marking apparatus for applying a message to an article, the apparatus comprising: a processor arranged to generate a print message by executing one or more message scripts to calculate dynamic fields of the print message, said one or more message scripts having been formed using a scripting language; and means for applying the print message to an article. The marking apparatus may be known as a product-identification printer or a primary-coding printer.

The apparatus may comprise an input for allowing a user to select the one or more message scripts to be executed by the processor to generate the print message.

The apparatus may be arranged to receive said one or more message scripts from a source external to said apparatus.

The one or more message scripts may be in a machine-readable format, the processor being arranged to execute said machine-readable format. Alternatively, the one or more message scripts may be in a human-readable format, the processor being arranged to execute said one or more message scripts by executing an interpreter for interpreting said human-readable format.

The apparatus may further comprise a clock, wherein at least one of the message scripts is arranged to cause the processor to use the output of the clock to calculate a dynamic field of the print message.

The apparatus may be arranged to receive a print trigger and, in response to the print trigger, generate the print message and apply the print message to an article.

The apparatus may comprise an input for receiving data from a source external to said apparatus, wherein at least one of the message scripts is arranged to cause the processor to use the received data to calculate a dynamic field of the print message.

There is also described a marking apparatus for applying a message to an article, the apparatus comprising: a processor arranged to generate a print message by executing one or more message scripts to calculate dynamic fields of the print message, said one or more message scripts having been formed using a scripting language; an input for receiving data from a source external to said apparatus, wherein at least one of the message scripts is arranged to cause the processor to use the received data to calculate a dynamic field of the print message; and means for applying the print message to an article.

This marking apparatus may form part of a system that also comprises a data source external to said marking apparatus and arranged to provide data to said marking apparatus via said input of said marking apparatus for use in calculating a dynamic field of the print message. The data source may comprise a sensor for determining one or more properties of the article.

There is also described a method for operating an apparatus for applying a message to an article, the method comprising: generating a print message by executing one or more message scripts to calculate dynamic fields of the print message, said one or more message scripts having been formed using a scripting language; and applying the print message to an article.

The method may comprise allowing a user to select the one or more message scripts to be executed by the processor to generate the print message.

The method may comprise receiving said one or more message scripts from a source external to said apparatus.

The one or more message scripts may be in a machine-readable format, the processor being arranged to execute said machine-readable format. Alternatively, the one or more message scripts may be in a human-readable format, the processor being arranged to execute said one or more message scripts by executing an interpreter for interpreting said human-readable format.

Executing one or more message scripts may comprise using an output of a clock of the apparatus to calculate a dynamic field of the print message.

The method may comprise receiving a print trigger and, in response to the print trigger, generating the print message and applying the print message to an article.

The method may comprise receiving data from a source external to said apparatus, wherein executing one or more message scripts comprises using said received data to calculate a dynamic field of the print message.

There is also described a computer program which, when executed by a processor, carries out the above-described methods. The computer program may be stored on a computer readable medium (such as an optical disk, a magnetic disc, a solid-state storage device, etc.).

There is also described a method of enhancing the capability of marking and/or coding apparatus, said method including creating a message script to be applied by said apparatus, said method being characterised in that it includes forming said message script using a scripting language providing a user with logic and field operations.

Preferably said scripting language is applied external to said printer.

Preferably said message script is compiled into machine-readable form and transferred to an operating system of said marking and/or coding apparatus.

Preferably said message is created on a computer remote from said apparatus and transferred by way of a USB key.

There is also described marking and/or coding apparatus programmed with a message script formed using a scripting language.

Preferably said marking and/or coding apparatus is adapted to receive said message script from an external source.

Preferably said marking and/or coding apparatus is adapted to receive said message script in machine-readable form.

Preferably said message script includes a statement to define script description information, said statement being identifiable by said apparatus.

Many variations in the way the present invention can be performed will present themselves to those skilled in the art. The description which follows is intended as an illustration only of one means of performing the invention and the lack of description of variants or equivalents should not be regarded as limiting. Wherever possible, a description of a specific element should be deemed to include any and all equivalents thereof whether in existence now or in the future.

### Brief Description of the drawings

An embodiment of the invention will now be described with reference to the accompanying drawing in which:
Figure 1: shows, diagrammatically, the creation and execution of a print message according to an embodiment of the invention;
Figure 2: shows, diagrammatically, the base primitives of the particular scripting language used to illustrate an embodiment of the invention;
Figure 3: shows, diagrammatically, the manner of processing a script according to an embodiment of the invention;
Figure 4: shows, diagrammatically, the structure of a scripting variable object as incorporated in an embodiment of the invention;
Figure 5: shows, diagrammatically, an example system using a product-identification printer;
Figure 6: shows, diagrammatically, an example system according to an embodiment of the invention;
Figure 7: is a flowchart illustrating the processing performed at a remote computer when generating a message script, according to an embodiment of the invention; and
Figure 8: is a flowchart illustrating the processing performed at a printer when using a message script, according to an embodiment of the invention.

### Description of Working Embodiment

Embodiments of invention provide a message creation facility for use in an industrial marking and coding apparatus (commonly referred to as a product-identification printer or primary-coding printer). The facility has been specifically designed for incorporation in a continuous inkjet (CIJ) printer but is equally applicable to other types of marking device including binary CIJ, drop-on-demand inkjet, and laser marking. The terms 'marking' and 'printing' are intended to include the application of marking and coding by all known techniques as the printing function *per se* does not form part of the invention.

In its simplest embodiment, the invention provides a method of creating and embedding a dynamic customised clock and/or counter field within a message to be printed via the writing of a 'script' using a scripting language based on a number of 'primitive' data types and operators.

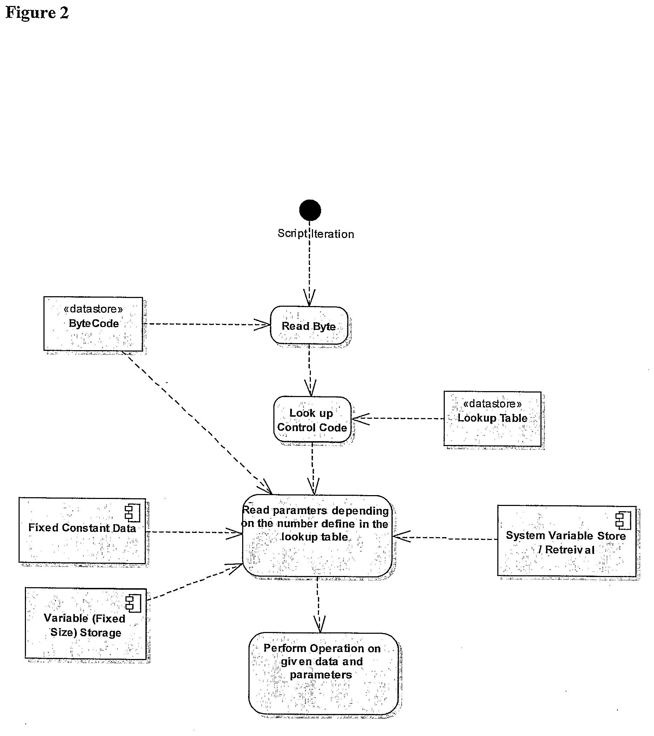

The term scripting language as used herein is intended to mean a set of human readable instructions for performing logical and arithmetic operations, which instructions are subsequently integrated, compiled or interpreted to create machine functions. In the description which follows the scripting language used is the Domino Custom Scripting Tool (also referred to as the PC Tool). However it will be appreciated by those skilled in the art that embodiments of the invention could be adapted for use with other commonly available scripting language tools such as, form example, VBScript and PERL. The base primitives of the scripting language are shown in Figure 2 and will be described in greater detail below.

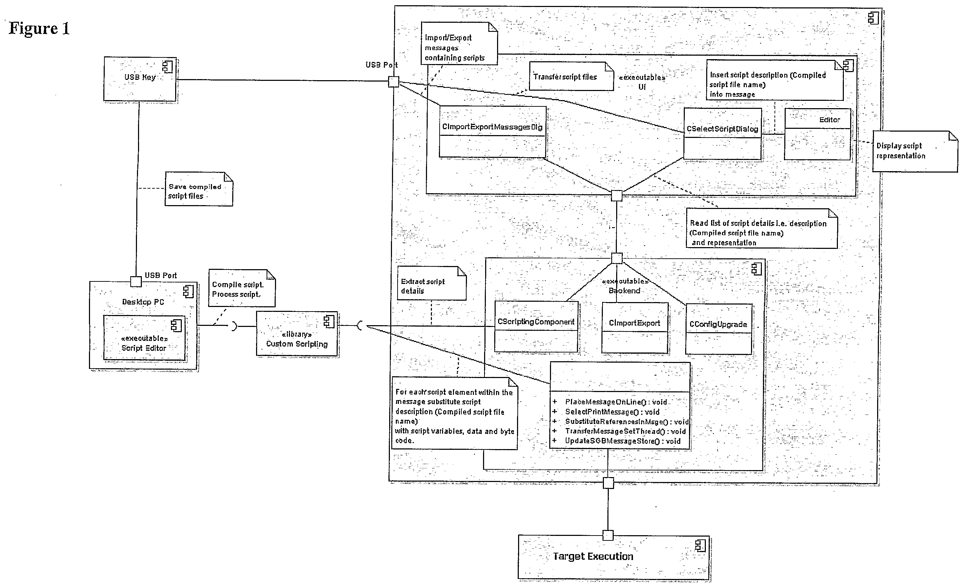

The process of creation and execution of a print message is shown in Figure 1. As can be seen, message scripts are created, edited and previewed on a remote computer using the PC Tool. In some embodiments, only at this stage are scripts human readable, in the interests of minimizing the opportunity for site operator interference. Similarly existing scripts may be imported from a printer for subsequent customising using the PC Tool.

The process of script creation will be described in greater detail below.

Once the PC Tool operator is satisfied with the script, and all rules (described later) associated with script formation have been complied with, the PC Tool compiles the script into machine (printer) readable format and the script transferred to the printer. In the example shown, transfer is effected by downloading the compiled script on to a USB key which is then inserted into the printer's USB port. It will be appreciated, however, that transfer could be effected by other well known means. It will also be appreciated that, as an alternative to compiling, the printer could be provided with an interpreter. However, compiling is preferred due to the higher transfer speeds and reduced execution/processing time which can be achieved.

Preferably, the operating system of the printer is programmed to look for specific file extensions in a specific location of the USB key where the compiled scripts are located. The printer performs checks on these compiled scripts (name, application etc) to ensure they are valid for subsequent use in the printer.

As can be seen in Figure 1, the printer's Editor is configured to allow a site operator to select compiled scripts for insertion into a print message. In some embodiments, the Editor does not, however, allow Statements within the compiled scripts to be viewed as, for simplicity, it is deemed inappropriate for site operators to have the ability to alter scripts locally on the printer.

A script item (or element) may be inserted into a message created via the Editor. The message contains a reference to the script inside it, for example:

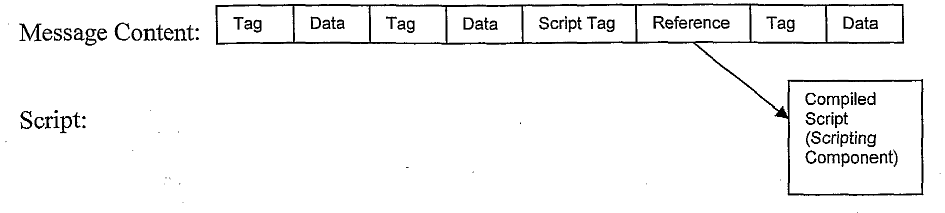

Compiled scripts are downloaded to the Target so that they are available for referencing from within messages to be printed.

When the message is selected for printing the Message Content is parsed and the script reference is used to embed the script for execution. Each time a print trigger is received, the dynamic fields within the message are calculated and the message pattern constructed. As part of this sequence, the script is executed to calculate the required result.

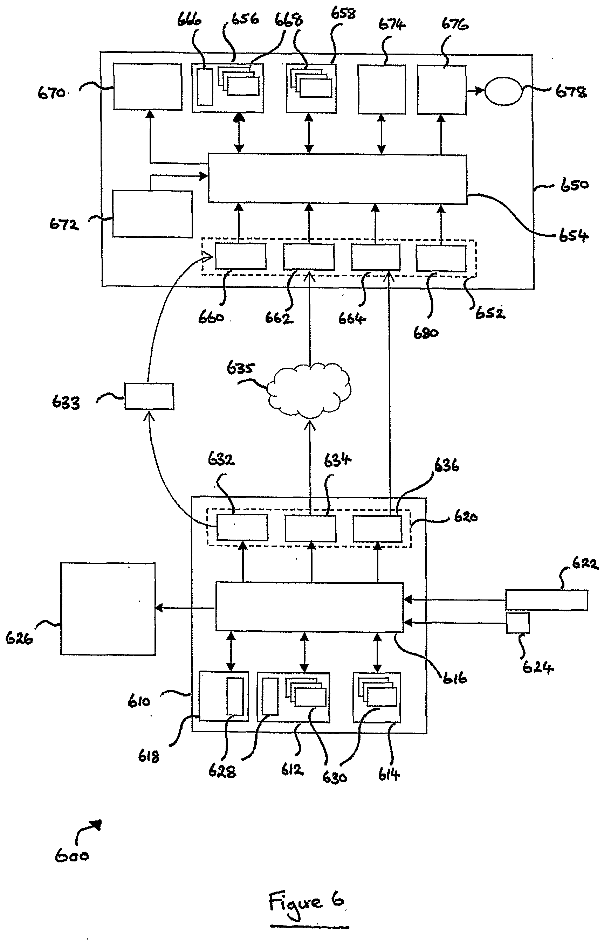

Figure 6 schematically illustrates an example system 600 according to an embodiment of the invention. The system 600 comprises a remote computer 610 and a product-identification printer 650, both of which will be described in more detail below. In summary, a message script is created at the remote computer 610 by a user and is transferred to the product-identification printer 650 for use in marking articles. The transfer may be a transfer of a compiled message script (if the remote computer 610 is arranged to compile message scripts into a machine-readable format) or of a non-compiled message script (for example, if the printer 650 is arranged to execute an interpreter to interpret non-compiled message scripts in a human-readable format).

The remote computer 610 may be any form of computing device suitable for generating a message script (such as a personal/desktop computer, a laptop, a personal digital assistant, etc). The remote computer 610 comprises a non-volatile memory (a read-only-memory) 612, a volatile memory 614 (such as a random-access-memory), a processor 616, a storage medium 618 (such as a hard-disk-drive) and an interface 620. A user may provide instructions/input to the processor 616 via one or more input devices (such as a keyboard 622 and a mouse 624, although other input devices may be used in addition or instead). The remote computer 610 may provide a visual display to the user by the processor 616 controlling a display 626 (such as an LCD screen).

The non-volatile memory 612 and/or the storage medium 618 may store one or more files/modules 628 having program instructions which form an operating system to be executed by the processor 616 of the remote computer 610. Additionally, the non-volatile memory 612 and/or the volatile memory 614 and/or the storage medium 618 may store one or more files 630 (or modules) which, together, form one or more software applications or computer programs that may be executed by the processor 616 and with which the user may interact in order to create, save, possibly compile, and output a message script. Message scripts that have been created may be stored by the remote computer 610, for example on the storage medium 618.

A message script (or compiled message script) created by a user at the remote computer 610 may be transferred/communicated to the printer 650 in a variety of ways. For example, the interface 620 may comprise a USB port 632 via which the processor 616 may store/save a (compiled) message script onto a USB memory device 633. The USB memory device 633 may then be used to load the message script onto the printer 650. Additionally, or alternatively, the interface 620 may comprise a network port 634 via which the processor 616 may communicate data (including a (compiled) message script) to the printer 650 via a network 635 (such as the Internet, a local area network, a wide area network, a metropolitan area network, etc.). Additionally, or alternatively, the interface 620 may comprise a serial interface 636 via which the processor 616 may communicate a (compiled) message script to the printer 650 via a serial communication link (such as an RS232 link). It will be appreciated, however, that the remote computer 610 may communicate message scripts to the printer 650 via any suitable method, which may be wireless or wired, and which may or may not involve using additional storage media.

The printer 650 comprises an interface 652, a processor 654, a non-volatile memory and/or storage medium 656 (such as a read-only-memory and/or a hard disk drive) and a volatile memory 658 (such as a random-access-memory).

The interface 652 provides a suitable mechanism for receiving (compiled) message scripts from the remote computer 610. For example, if a message script is to be communicated to the printer 650 via the USB memory device 633, then the interface 652 comprises a USB port 660 via which the processor 654 can access the message script from the USB memory device 633 and store the message script in the volatile memory 658 and/or the storage medium 656. Additionally and/or alternatively, if a message script is to be communicated to the printer 650 via the network 635, then the interface 652 comprises a network port 662 via which the processor 654 can access the message script over the network 635 and store the message script in the volatile memory 658 and/or the storage medium 656. Additionally and/or alternatively, if a message script is to be communicated to the printer 650 via a serial communication link, then the interface 652 comprises a serial communication port 664 via which the processor 654 can access the message script and store the message script in the volatile memory 658 and/or the storage medium 656. As with the remote computer 610, it will be appreciated that the printer 650 may receive message scripts via any suitable method, which may be wireless or wired, and which may or may not involve using additional storage media.

The non-volatile memory and/or storage medium 656 may store one or more files/modules 666 having program instructions which form an operating system to be executed by the processor 654 of the printer 650. Additionally, the non-volatile memory and/or storage medium 656 and/or the volatile memory 658 may store one or more files 668 (or modules) which, together, form one or more software applications or computer programs that may be executed by the processor 654 and which (i) allow a user of the printer 650 to select and combine message scripts and unscripted messages to form an output message to be used for a printing process; and (ii) execute compiled message scripts, or interpret non-compiled message scripts, to generate the final content/data for the output message, i.e. to determine/calculate the values for dynamic fields of the final print message. As such, the printer 650 may comprise an input mechanism 672 (such as a keyboard) via which a user may interact with the printer 650 and provide input (such as message selections) to the processor 654, as well as a display 670 (such as an LCD screen) for providing information visually to the user (such as a representation of a message, or a list of message scripts). The display 670 and the input mechanism 672 may be combined, for example by using a touch-sensitive screen.

The printer 650 also comprises a clock 674 (such as a real-time-clock) that the processor 654 may use when processing message scripts to determine information (such as the current time and date), i.e. the processor 654 may use of the output of the clock 674 to determine a dynamic field of a print message when executing a message script.

Additionally, to actually perform the printing the printer 650 comprises a printer engine 676 and a print head 678. The printer engine 676 receives message data (a generated print message) from the processor 654 for printing on an article, and, in response to the message data, controls the print head 678 to actually perform the printing.

Finally, the printer 650 may comprise (for example, as part of the interface 652) an input 680 for receiving other external inputs/stimuli. For example, the modules 668 may be generic modules used for all printers 650 (regardless of application or customer), and therefore, to customise the printing for a specific application (e.g. a specific customer), further data may be input to the printer 650 via the input 680 for use by the processor 654 to generate messages particular to the application/customer. Additionally, or alternatively, the input 680 may receive data from devices external to the printer 650 so that the processor 654 may adapt the message data to be printed in accordance with the received data (e.g. by inserting that received data into the output print message). Examples of such devices include one or more sensors (not shown) that may be monitoring the printing process or some other process (such as a monitor for the conveyor belt 506 or a sensor that detects the particular type of unmarked article 504, thereby allowing a message script to insert an indication of the type of the article 504 into the print-message content). The device may comprise a sensor that detects, or determines, one or more attributes or properties of the article 504. For example, a weigh-scale (not shown) may be arranged to provide a weight value, for example via an RS232 interface of the input 680, thereby allowing a message script to insert the weight of an article 504 into a print-message for printing on that article 504. As a further example, data may be received at the input 680 from the conveyor belt mechanism 506 or from a switching apparatus on a production line (not shown) that may then be used by a message script to generate a print-message that has tracking and/or sorting information to thereby allow marked articles 510 to be sorted or tracked. The input 680 may have its own memory (not shown, but may be, for example, implemented as a shift-register into which an external device may insert data and from which the processor 654 may retrieve data) or may make use of the volatile memory 658.

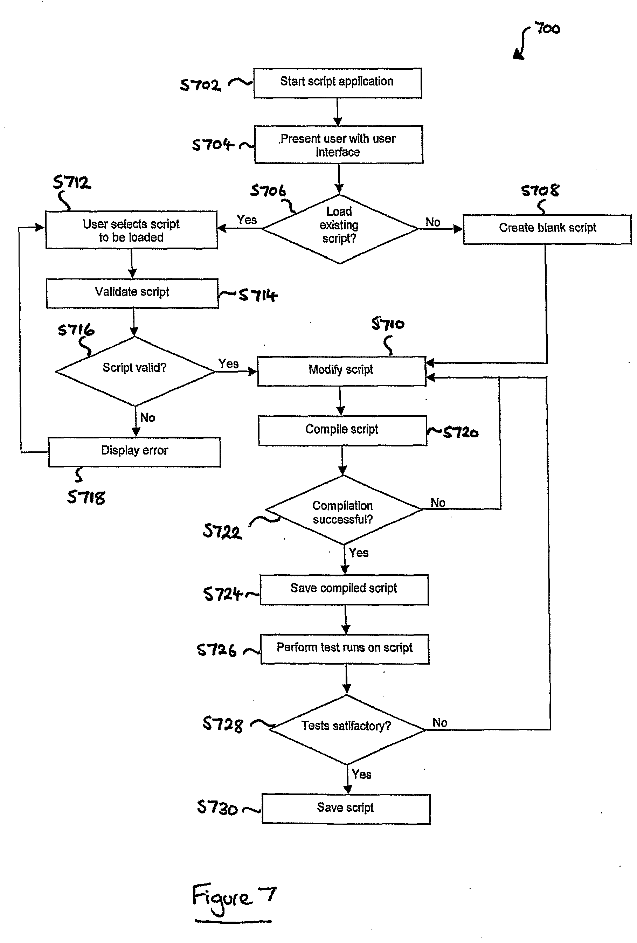

Figure 7 is a flowchart illustrating the processing 700 performed at the remote computer 610 when generating a message script, according to an embodiment of the invention. The processing 700 is performed by the processor 616 of the remote computer 610 executing one or more of the modules 630. The user (operator) of the remote computer 610 also provides input for the processing 700 via, for example, the keyboard 622 and the mouse 624, and is provided with a visual display of the processing via the display 626.

The processing 700 begins at a step S702, at which a script generation (PC Tool) application is started, i.e. the processor 616 executes one or more of the modules 630 to run the script generation application. At a step S704, the processor 616 provides the user with a user interface, displayed on the display 626.

At a step S706, it is determined whether the user wishes to create a new message script, or load/open an existing message script. If the user wishes to create a new message script, then a blank script is created at a step S708 which the user may then modify (or edit) at a step S710. The script generation application may provide, for example, a text-editor-style environment in which the user may add, delete, insert, modify text and/or characters to form a message script.

Alternatively, if the user wishes to load/open an existing message script (for example, a message script that has been saved on the storage medium 618), then the user controls the script generation application to select the desired message script (at a step S712). Then, at a step S714, the script generation application opens and validates the selected file/script (for example, checks that file is indeed a message script and that it is in the correct format and that the version of the message script is compatible with the version of the script generation application). If, at a step S716, it is determined that the message script is invalid, then processing continues at a step S718 at which the script generation application displays an error message to the user, before returning to the step S712. Alternatively, if it is determined that the message script is valid, then processing continues at the step S710 at which the user may modify (or edit) the loaded message script.

Once the user has finished modifying the message script (if, indeed, modification is required) at the step S710, then processing continues to a step S720 at which the script generation application causes the processor 616 to compile the message script to form a compiled message script.

If, at a step S722, it is determined that the compilation was unsuccessful (for example, if there are syntax errors in the message script or if required elements of the message script are absent), then processing returns to the step S710 at which the user may edit the message script so that it becomes compilable.

Alternatively, if, at the step S722, it is determined that the compilation was successful, then processing continues at a step S724 at which the compiled message script is saved. The location at which the compiled message script is saved may be selected by the user. The location may be, for example, on the storage medium 618, a location on the network 635 or on the USB memory device 633.

The user may then, at a step S726, perform tests using the compiled message script in order to check that the functionality intended by the user of the message script is actually being provided by the compiled message script. If, at a step S728, the testing indicates that the compiled message script is unsatisfactory (i.e. it does not provide the desired functionality), then processing returns to the step S710 at which the user may modify the message script so as to correct the functionality that it will provide. Alternatively, if, at the step S728, the testing indicates that the compiled message script is satisfactory (i.e. it does provide the desired functionality), then processing continues at a step S730 at which the script generation application saves the message script (for example, on the storage medium 618 or to a location on the network 635 or on the USB memory device 633).

It will be appreciated that the above-mentioned operations may be performed in an alternative order, and that some of the above-mentioned steps may be omitted. For example, the user could save the message script at any time, rather than simply at the end of the processing 700. Additionally, the user may omit the testing steps S726 and S728.

Furthermore, in embodiments in which the printer 650 is to receive a message script (in human-readable format), as opposed to a compiled message script (in machine-readable format), with the printer 650 being arranged to run/execute an interpreter to provide run-time interpretation of message scripts, then the processing 700 may omit the steps S720, S722 and S724.

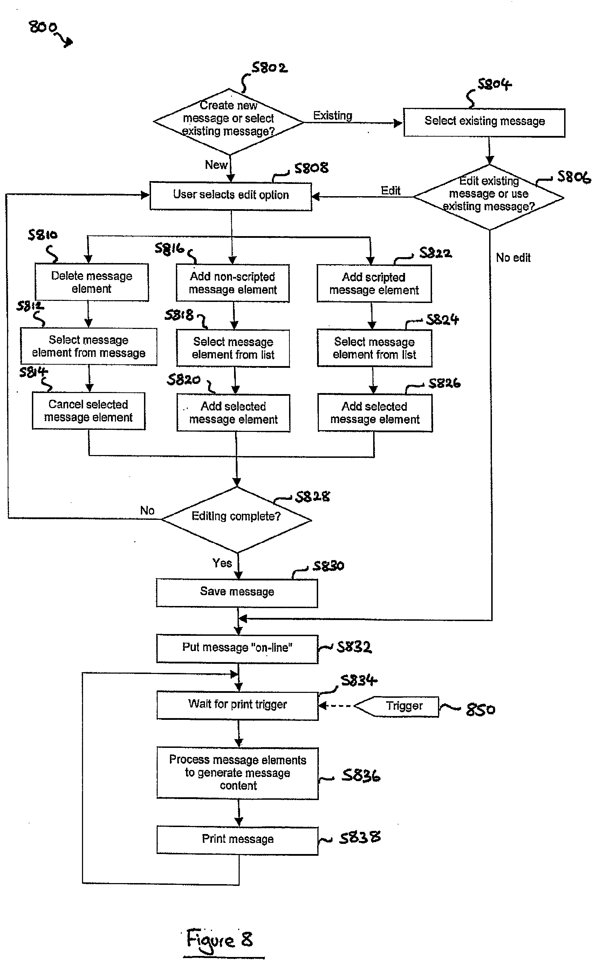

Figure 8 is a flowchart illustrating the processing 800 performed at a printer when using a message script, according to an embodiment of the invention. The processing 800 is performed by the processor 654 of the printer 650 executing one or more of the modules 668. The user (operator) of the printer 650 also provides input for the processing 800 via, for example, the input 672 and is provided with a visual display of the processing via the display 670.

The printer 650 may store/save one or messages in its non-volatile memory and/or storage medium 656 (see the later step S830). Therefore, at a step S802, the user selects whether a new message is to be created or whether an existing message stored in the non-volatile memory and/or storage medium 656 is to be used (either in its current form or in a modified form).

If the user opts to use an existing message, then processing continues at a step S804 at which the user selects the existing message to use. For example, a list of existing stored messages may be displayed to the user on the display 670, and the user may then select one of them accordingly (for example, by using the keyboard 672). Then, at a step S806, the user selects whether the selected message is to be used in its current form or whether the selected message is to be modified before being used.

If, at the step S802, the user opts to create a new message, or if, at the step S806, the user opts to modify a selected existing message, then processing continues at a step S808. The message to be printed on an unmarked article 504 comprises one or more message elements. The content of some message elements may be predetermined (for example, logos, images, predetermined text, predetermined blank spacing, code numbers, etc.) - their content is not determined at print-time (i.e. when a print operation is performed) or at run-time. The content of some message elements may be determined at print-time or at run-time, but without the use of a message script (for example, simple elements such as a clock, a counter or a barcode). Both of these types of message element are referred to as non-scripted message elements. In contrast, the content of other message elements (scripted message elements) is determined by the execution of an associated compiled message script (or the interpretation of a non-compiled message script), so that their content is determined at print-time or at run-time (see step S836 later), i.e. values for dynamic fields of the scripted message elements are determined at the time the message is to be applied to an article. At the step S808, the user determines whether to delete a message element from the message, whether to add a non-scripted message element to the message, or whether to add a scripted message element to the message.

If the user selects to delete a message element from the message, then processing continues at a step S810 at which the processor 656 allows the user to select the particular message element to cancel from the message. At a step S812, the user selects a message element and then, at a step S814, that selected message element is cancelled from the message, i.e. it no longer forms part of the message.

If the user selects to add a non-scripted message element to the message, then processing continues at a step S816 at which the processor 656 displays a list of non-scripted message elements to the user and allows the user to select the particular non-scripted message element to add to the message. This list may comprise references or names for the non-scripted message elements, or may alternatively comprise displays/representations of the non-scripted message elements. At a step S818, the user selects a non-scripted message element and then, at a step S820, that selected non-scripted message element is added to the message. This may simply involve adding the selected non-scripted message element to the end of a text string. Alternatively, this may involve the user selecting a location within a text string at which to insert/add the selected non-scripted message element. Alternatively, the message may be a two-dimensional image in which a non-scripted message element may be located, in which case the user may select the location at which to position the non-scripted message element.

If the user selects to add a scripted message element to the message, then processing continues at a step S822 at which the processor 656 displays a list of scripted message elements to the user and allows the user to select the particular scripted message element to add to the message. This list may comprise references or names for the scripted message elements, or may alternatively comprise displays/representations of the scripted message elements. These displays/representations may be predetermined example representations, since the actual content of the scripted message element is determined when a printing operation is actually performed in response to a print trigger (i.e. at print-time or at run-time). At a step S824, the user selects a scripted message element and then, at a step S826, that selected scripted message element is added to the message. This may simply involve adding the selected scripted message element to the end of a text string. Alternatively, this may involve the user selecting a location within a text string at which to insert/add the selected scripted message element. Alternatively, the message may be a two-dimensional image in which a scripted message element may be located, in which case the user may select the location at which to position the scripted message element.

At a step S828, it is determined whether or not the user has finished editing the message. If the user has not finished editing the message, then processing returns to the step S808; otherwise, if the user has finished editing the message, then processing continues at the step S830, at which the message may be stored (or saved) in the storage medium 656 of the printer 650. This is an optional step, and it will be appreciated that it may be performed at a variety of stages within the processing 800, for example, during the above-mentioned editing steps. Saving the message allows it to be used again in the future, either in its current form or as a template for subsequent modification.

Next, at a step S832, the processor 654 places the message "on-line", i.e. the printer 650 is ready to print the message. The step S832 may also be reached if the user, at the step S806, opted not to modify a selected existing message.

At a step S834, the processor 654 waits for a print trigger 850, for example, a signal indicating that an unmarked article 504 is at a position at which the printer 650 can print the message on that article 504. When a print trigger 850 has been received, the processor 654 processes the message and its message elements to generate the message content (at a step S836). In particular, the processor 654 executes compiled message scripts of scripted message elements to determine, at print-time or at run-time, the content of that scripted message element, i.e. calculates the values of dynamic fields of the print message. Alternatively, if the processor 654 is executing an interpreter and the message scripts are not compiled, then the processor 654 interprets message scripts of scripted message elements to determine, at print-time or at run-time, the content of that scripted message element, i.e. calculates the values of dynamic fields of the print message. Examples of this are given later, but they may involve the use of the output of the clock 674 to calculate the value of a time/date-based dynamic field, or data received via the input 680 from a source external to the printer 650 (for example, setting a dynamic field of the print message by inserting a weight value into the message content, or inserting product type data into the message content, or inserting sorting and/or tracking data into the message content).

Once this has been performed, the content determined for scripted message elements, and the predetermined content of any non-scripted message elements, form the print message to be printed. The print message is then printed, at a step S838, on an article 504. Processing then returns to the step S834, at which the processor 654 waits for a print trigger 850 for the next print.

An example of a set of rules for forming a script using the PC Tool will now be described. Reference is also drawn to the Glossary which appears on pages 38 and 39 of this specification.

### Text characters

1. All text strings and characters described in this specification are Unicode. *Defining Script Description Information*
2. A Script Statement is used to define the Preview Output. The Preview Output is a series of up to 64 text characters. This Preview Output string is part of the script header and is an example of the output expected from the Compiled Script. The purpose of this field is to provide a means to view a representation the expected output of the script without having to execute the script.
3. A Script Statement is used to define the Script Description. The Script Description is a series of up to 64 text characters. The purpose of this field is to provide a means to describe a reference to a script within a message.
4. A script has a Name. The Script Name is a series of up to 15 characters. The purpose of this Name is to provide a means to reference a script within a message or select it for inclusion into a message.

### Defining variables and constants

5. A Script Statement is used to define a user variable. This variable can contain an integer value or a series of text characters.
6. Numbers are signed 32bit integers, limits are in the range -2147483648 to +2147483647.
7. Text variables must have the length defined at declaration or the length will default to 4. Maximum length of a text variable is 128.
8. A Statement shall define the type of the variable before it is used.
9. A Statement is used to define a value which will contain the same constant data throughout execution of the script.
10. The value of a text or numeric variable is retained between executions of the Compiled Script.
11. A variable may also be defined as being persistent or non-persistent i.e. whether it survives printer shut-down.

### Defining format of output to the message field

12. A Statement is used to define the maximum length of the output to the message field. If not defined, then the output to the message field can be any length.
13. A Statement is used to define whether the message field is padded to its maximum length. This command will be ignored if the maximum length of the output field has not been defined.
14. A Statement is used to define the padding character if the message field is to be padded. This character is then used to pad the left hand side of the output e.g. if the output result is 27, the maximum field length is 4, and the padding character is "0", then the message will be printed with this field showing: 0027.

### Manipulation of variables

15. A Statement shall allow the addition of two variables of the same type.
16. A Statement shall allow the addition of a variable and constant data of the same type.

### Date/time data

17. A Function can return the system time in seconds since Jan 1st 1970.
18. A Function can return the number of days between the current date and a defined starting date. The operator can define the start date. The default is 1^{st} Jan 1970.
19. A Date/Time Function shall return the current date and time.
20. It is possible to add or subtract a fixed offset from a date. This offset is able to be expressed in years, months, days, hours, minutes or seconds.
21. A Date/Time Function can return the numeric seconds in the current time i.e. the ss part of hh:mm:ss.
22. A Date/Time Function can return the numeric minutes in the current time i.e. the mm part of hh:mm:ss.
23. A Date/Time Function can return the numeric hours in the current time i.e. the hh part of hh:mm:ss.
24. A Date/Time Function can return the numeric days in the current date i.e. the dd part of dd/mm/yyyy.
25. A Date/Time Function can return the numeric months in the current date i.e. the mm part of dd/mm/yyyy.
26. A Date/Time Function can return a numeric year in the current date i.e. the yy part of dd/mm/yyyy. This is the full year value e.g. 2007.
27. A Function can return a numeric current day of week.
28. The operator (PC Tool or printer operator) can state which day of the week is the first day of the week (default setting is Sunday for first day of the week).
29. The operator can state which time of the day is the roll-over time between one day and the next (default setting is 00:00 - midnight).
30. A Function can return a numeric current week of year.
31. The operator can state which day is the start of the first week of the year (default setting is Jan 1st).
32. The operator can state which time of the day is the roll-over from one week to the next (default setting is 00:00 - midnight).
33. A Function can return a numeric current day of year i.e. the Jan 1^{st} is 1, Jan 2^{nd} is 2, and so on.
34. The operator can define the day number for March 1st (all subsequent days following March 1st will return the day number offset from this value e.g. if Mar 1^{st} = 60, Mar 2^{nd} = 61, and so on) - the default is 60.
35. The operator can define the day number for Feb 29^{th} - this setting shall have not affect the day number return on other dates - the default is 366.
36. A Function can return text for the appropriate "day name" for a given numeric variable value. This numeric variable value must be between 1 and 7. The operator can set up to 16 characters for each of the seven day names. The default is that these values are all empty - no text.
37. A Function can return text for the appropriate "month name" for a given numeric variable value. This numeric variable value must be between 1 and 12. The operator can set up to 16 characters for each of the twelve month names. The default is that these values are all empty - no text.

### Maths and variables types

38. Statements are available to the operator to allow arithmetic operations on numeric variables and numeric System Settings. These include addition, subtraction, multiplication, and division.
39. Add/Subtract operations are performed in signed integers.
40. Multiplication and division do not handle remainders, and only return integer numbers.
41. Mathematical operations are only carried out on Numeric variables.
42. Numeric outputs are able to be expressed using Roman, Arabic or Farsi numeric characters.

### Logical and execution order operations.

43. Statements are available to the operator to check conditions and jump somewhere in the Script if the condition is met. These are > (greater than), < (less than), <= (less than or equal to), >= (greater than or equal to), o (not equal to), and = (equal to). These comparisons can be on either text or numeric variables, but must be comparing the same types.
44. A statement is available which add a number or alpha string to a sequence number.
45. A statement shall allow the contents of the message field to be set. When this is done, the execution of the Compiled Script will terminate.
46. The contents of the message field are set using a text or numeric variable. If using a numeric variable, then the numerical value is displayed in text form in the field.
47. A jump statement is available to change the current execution location to the location stated.
48. A jump location is allowed to be defined.
49. An Exception statement is provided. In the event of an execution error detected by the Script Processor, Statements following this Exception Statement is executed.
50. Statements following the Exception label/Statement cannot contain Jump Statements.
51. If an execution error occurs after the Script Processor has jumped to the Exception label, then the script will be terminated. The appropriate execution error alert is raised.

### Manipulating variables containing text

52. A statement is available to format a serial string.
53. A statement shall allow the operator to swap two characters in a text variable.
54. The operator shall have the ability to reverse a string or number i.e. 1234 to 4321 or "abcd" to "dcba".

### Script Alerts

55. A Statement shall cause a Script Alert to be raised. A script alert is a method to flag to the application that a problem has occurred during script execution.

### Commentary and descriptions

56. The operator can enter comments into the Script.
57. Scripts are saved with a description, creation date, and a representation of the appearance (Preview Output).

Models illustrating the structure of the scripting method will now be described.

Referring to Figure 2, this figure describes the data flow during a script iteration. The script is processed a bytes at a time. The script is parsed and the various control codes (instructions) in the script are extracted, looked up and the parameters (fixed constants, user variables and system variables) associated with the control codes are fetched and processed to perform the operation.

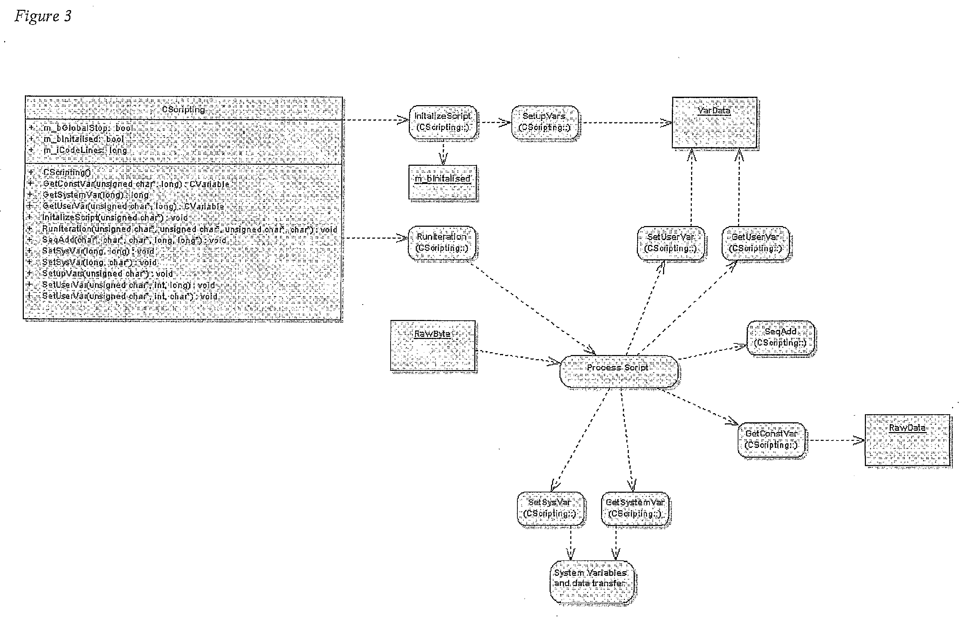

The manner in which the script is processed is shown in greater detail in Figure 3, this Figure showing the various classes (CScripting class) and member functions (GetSystemVar, GetUserVar etc) that are used to perform the sequence shown in Figure 2.

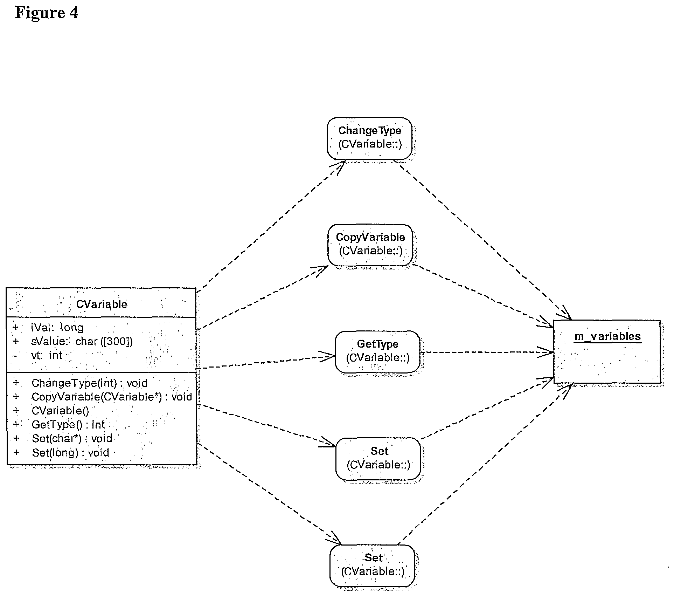

Turning now to Figure 4, this figure illustrates the structure of a CVariable class - it describes the various actions that can be performed on the CVariable object-ChangeType allows the object to be changed from a string to an interger value or vice versa, CopyVariable allows the object to be copied to create another instance of the object, GetType returns the type of the variable - string or integer, Set(wchar*) sets the variable up to be a Unicode string, Set(long) sets the variable up to be a numeric value. The instruction set for the scripting language is listed below.

| |
|---|
| **VAR** |

Sets a User Variable that can be used to perform operations on, like add or sub. Variables are additionally used to store system variables in. These can be given any name and must not have a % in front of them. Variables can also be initialised at creation.

### Example 1

| | | |
|---|---|---|
| | | |
| VAR | MyVariableA,100 | // Create User Variable 1 |
| VAR | MyVariableB,200 | // Create User Variable 2 |
| VAR | MyVariableC | // Create User Variable 3 |
| VAR | MyVariableD | // Create User Variable 4 |
| SET | MyVariableC,1 | // Set the Value of VariableC |
| SET | MyVariableD,%DayAdvance | // Get the System DayAdvance |
| ADD | VariableC,VariableD | // Add together |

| |
|---|
| **SET** |

This is used to set a value to a variable or system Variable. Set always works by setting the first variable with the second parameter.

The Second Parameter can be:
Another User Variable
A System Variable
A Number
A String

### See Example 1

| |
|---|
| **DATETIME** |

This returns the current date and time. Note that the format of this date and time is not yet set and is a internal system date time, before any formatting has occurred. To change the date and time to make an offset, system variables must be set before this is called.

### Example 2

| | | |
|---|---|---|
| VAR | MyTime | // Create a User variable |
| DATETIME | MyTime | // Retrieve the current Date and Time |
| | | |
| VAR | AdvancedTime | // Create another User Variable |
| SET | %MonthAdvance,1 | // Tell system to add 1 month |
| SET | %DayAdvance,1 | // Tell system to add 1 day |
| DATETIME | MyTime | // Retrieve the Offset Date and Time |
| | | |

| |
|---|
| **RETURN** |

Return will instruct the system that is has finished the current script and can now finish. Return should be passed a variable or value to return to the system for printing.

### Example 3

| | | |
|---|---|---|
| VAR | MyVariable | // Create User Variable |
| SET | MyVariableC,10 | // Set it to 10 |
| RETURN | MyVariable | // returns 10, which is printed |

| |
|---|
| **GETDAYNUMBER** |

This returns the Day number of the year. Jan 1^{st} being Day 0 and Dec 31^{st} being day 364. However Leap years will cause the system to behave in different ways depending on the system variable setting.
%March1 Set this to tell the system that March 1^{st} Day number is either 060 or 061
%FEB29 Set this to tell the system that Feb29th Day Number is either 366 or 060

Calling GETDAYNUMBER after this will return the correct day required.

| |
|---|
| **GETWEEKNO, GETDOW, GETDAYS** |

These functions will return date information
GETWEEKNO returns the current week number that the date is in. The time that the week starts can be altered using system variable %WEEKSTARTTIME
GETDOW returns the Day of the week
GETDAYS returns the number of days since a date. Set in %StartDate

### Example 4

| | |
|---|---|
| VAR | WeekNo |
| GETWEEKNO | WEEKNO |
| | |
| VAR | DayOfWeek |
| SET | %WEEKSTARTTIME, "05:30" // New Week Starts @ 5.30am on Sunday |
| GETDOW | WeekNo |
| | |
| VAR | Days |
| SET | %StartDate,"01:01:2005" |
| GETDAYS | Days |

| |
|---|
| **ADD, SUB, DIV, MUL** |

These instructions allow the user to perform arithmetical operations on User Variables.

| | |
|---|---|
| VAR | MyVariable,0 |
| ADD | MyVariable,5 |
| SUB | MyVariable,2 |
| MUL | MyVariable,5 |
| DIV | MyVariable,3 |

| |
|---|
| **JLE, JLT, JEQ, JGE, JGT,** |

Branching and Jumping in the Script require the script to be able to check values and branch to another part of the script if necessary.
- JLE: - Jump Less Than or Equal
- JLT: - Jump Less Than
- JEQ: - Jump Equal
- JGT: - Jump Greater Than
- JGE: - Jump Grater Than or Equal

These operations always compare the first argument, with the second. The final parameter is the Jump location in the script file.

### Example 5

| | | |
|---|---|---|
| JGT | 5, 4, JUMPLOCATION | // jump if 5 is greater than 4 |
| JGE | 5, 4, JUMPLOCATION | // jump if 5 is greater than or equal to 4 |
| JLT | 5, 4, JUMPLOCATION | // jump if 5 is less than 4 |
| JLE | 5, 4, JUMPLOCATION | // jump if 5 is less than or equal to 4 |
| JEQ | 5, 4, JUMPLOCATION | // jump if values are the same |
| | | |

| JUMPLOCATION: | | |
|---|---|---|
| | // we jump here if the compare is true. | |

| |
|---|
| **FORMATSERIAL, SEQADD** |

Serial numbers can be made from numbers or letters. Several variables have to be set before using to set the system up.

### Example 6

| | | |
|---|---|---|
| SET | SequenceJump, "BANZAI" | |
| SET | SequenceMax, "ZZZZZZ" | |
| SET | SequenceOffset, 0 | |
| SET | SequenceStart, 0 | |
| SET | %SYSTEMZEROCHAR, "A" | // Tell system A = 0 |
| SET | %SYSTEMBASE,26 | // put in Base 26 (A-Z) |
| | | |
| RESTART: | | |
| SET | SavedSequence,SequenceOffset | |
| SEQADD | SequenctOffset,SequenceJump | |
| FORMATSERIAL | SavedSequence | |
| RETURN | SavedSequence | |

| | | |
|---|---|---|
| *Note this is only a snippet of code. See (Example: Print Lottery Tickets) below for full code. | | |

The above example used 2 commands to build a sequence number. SEQADD and FORMATSERIAL.

SEQADD will add the value in SequenceJump to the current Counter.

### Eg.

| %SequenceJump=AAAAAB | | |
|---|---|---|
| AAAAAA | + %SequenceJump | = AAAAAB |
| AAAAAB | + %SequenceJump | = AAAAAC |

### Or

| %SequenceJump=BBBBBB | | |
|---|---|---|
| AAAAAB | + %SequenceJump | = BBBBBB |
| BBBBBB | + %SequenceJump | = CCCCCC |

| |
|---|
| **SWAP** |

Swap allows the user to manipulate the characters in the output. This should be called after retrieving any times or serial number.

### Example 7

| | | |
|---|---|---|
| VAR | MyVar | |
| SET | MyVar, "1234" | |
| SWAP | MyVar, 2, 3 | // MyVar = "1324" |
| SWAP | MyVar, 1, 4 | // MyVar = "4321" |

| |
|---|
| **SYSTEM** |

System allows the script to send a message to the main processor to stop printing or other action.

### Example 8

| | |
|---|---|
| SYSTEM Stop | // Stops the printer |

### Examples

The following list is a sample of typical scenarios that can be solved using this scripting method.

| | | |
|---|---|---|
| **1:** | **Example:** | **Month Advance (with Date Correction)** |

The offset month option acts simply to advance months. It is calculated after days, hours and minutes offset have been calculated, but before years have been added. After all fields have been added to the offset if the day of the month is greater than the number of days in that month then the day of the month is set to the last day of the month. For example:
Date : 30^{th} Jan 2007 + 1month = 28^{th} Feb 2007
Date : 31^{st} Jan 2007 + 1 month = 28^{th} Feb 2007

| | |
|---|---|
| START: | |
| VAR | TimeDate |
| SET | %MonthAdvance,1 |
| DATETIME | TimeDate |
| RETURN | TimeDate |
| END: | |

| | |
|---|---|
| **2: Example:** | **Get Day Number with Leap Day Correction** |

A method to indicate what the leap day format should be... e.g. The Julian date is to be altered so that day numbers are consistent between non- leap years and leap years, with February 29^{th} as day 60 and March 1^{st} as day 61.

### Values:

Note : 28^{th} Feb always 059
29^{th} Feb = Day 3 66 1^{st} March = Day 060
29^{th} Feb = Day 366 1^{st} March = Day 061
29^{th} Feb = Day 060 1^{st} March = Day 061 - non leap 060 omitted

| | |
|---|---|
| START: | |
| VAR | DayNo |
| SET | %March1, 0x60 |
| SET | %FEB29, 0x366 |
| GETDAYNUMBER | DayNo |
| RETURN | DayNo |
| END: | |

Or alternatively

| | |
|---|---|
| START: | |
| VAR | DayNo |
| SET | %March1,0x61 |
| SET | %FEB29,0x60 |
| GETDAYNUMBER | DayNo |
| RETURN | DayNo |
| END: | |

| |
|---|
| **3: Example: GET Date with - Next Day Changeover Time** |

E.g.. The next day will not be valid until 05:30am

| | |
|---|---|
| START: | |
| VAR | TimeDate |
| SET | %ChangeOverTime,"05:30" |
| DATETIME | TimeDate |
| RETURN | TimeDate |
| END: | |

### 4: Example: No Limit on number of days to offset

| | |
|---|---|
| START: | |
| VAR | TimeDate |
| SET | %DayAdvance, 365 |
| DATETIME | TimeDate |
| RETURN | TimeDate |
| END: | |

| |
|---|
| **5: Example: Alpha Mapping** |

### Months, Days, Hour, Minute, Seconds

Can use a lookup Character table.
month 0 ( Jan ) = "E"
month 1 ( Feb ) = "f"
month 2 (Mar) = "M"
day30 = "U"
hour 1 = "k"

| | |
|---|---|
| START: | |
| VAR | %AlphaMonths, "abcdefghijkl" |
| VAR | %AlphaDays, "abcdefghijklmnopqrstuvwxyz12345" |
| VAR | TimeDate |
| SET | %DayAdvance, 365 |
| GETDATETIME | TimeDate |
| RETURN | TimeDate |
| END: | |

### 6: Example: Freshness Code

Prints a number representing a value for the months since X Date.
Eg start date = Jan 2000
Jan 2000 = 00
July 2000 = 06
Jan 2001 = 12

| | |
|---|---|
| START: | |
| VAR | Days |
| SET | %StartDate, "01012007" |
| GETDAYS | Days |
| RETURN | Days |
| END: | |

### 7: Example: Sequence Manipulation - Serial Number Rollover

If a sequence number rolls over.. ignore printing for X prints before restarting

| | | |
|---|---|---|
| *START:* | | |
| VAR | SeqID,0 | |
| VAR | SEQDelay,10 | |
| VAR | SeqMax,0 | |
| SET | %STARTPOINT,RESTART | |
| RETURN | SeqID | // Returns 0 |
| RESTART: | | |
| ADD | SeqID,1 | // add 1 to sequence |
| JGT | SeqID,SeqMax,FINISHED | |
| RETURN | SeqID | // returns 1++++ |
| | | |
| FINISHED: | | |
| SUB | SeqDelay,1 | |
| JEQ | SeqDelay,0,START | |
| SET | %SYSTEMIGNORE,1 | |
| RETURN | 0 | |

| |
|---|
| **8: Example: Retard Time** |

| | |
|---|---|
| START: | |
| VAR | TIME |
| SET | %TIMERETARD, "10:30" // go back 10hrs 30 minutes |
| DATETIME | TimeDate |
| RETURN | TimeDate |
| END: | |

| |
|---|
| **9: Example: Get Week Number - starting at hh:mm on Sunday** |

### Week Number Changes at: Day & Time

Used to indicate when the week no has changed.

Eg. Sunday 06:00

| | |
|---|---|
| START: | |
| VAR | Week |
| SET | %WEEKSTARTDAY,"0" |
| SET | %WEEKSTARTTIME,"05:30" |
| GETWEEKNO | Week |
| END: | |

### 10: Example: Set Next Friday as Offset Day

Set the offset to be to the next X day.

Eg: Set offset to Next Friday
Tues 11 -> Fri 14^{th}
Fri 14^{th} -> Fri 14^{th}
Sat 15^{th} -> Fri 21^{st}

| | | |
|---|---|---|
| START: | | |
| VAR | TimeDate | |
| VAR | Day | |
| VAR | Temp | |
| SET | Temp,5 | // Day 5 Friday |
| GETDOW | Day | |
| GETDATETIME | TimeDate | |
| JEQ | Day,Temp,SAMEDAY | |
| JLT | Day,Temp,NOTTHEREYET | |
| SUB | Day,Temp | // 6 - 5 = 1 (sub 1 days) |
| ADD | Day,7 | // to next week |
| SET | %DayAdvance,Day | |
| GETDATETIME | TimeDate | |
| RETURN | TimeDate | |
| | | |
| NOTTHEREYET: | | |
| SUB | Temp,Day | // 5 - 2 = 3 (add 3 days) |
| SET | %DayAdvance,Temp | |
| GETDATETIME | TimeDate | |
| RETURN | TimeDate | |
| | | |
| SAMEDAY: | | |
| RETURN | TimeDate | |
| END: | | |

| |
|---|
| **11: Example: Swap Characters** |

be able to swap and characters in the given string.
i.e.
"1234" Swap 2,3 = "1324"

| | |
|---|---|
| START: | |
| VAR | TIME |
| DATETIME | TimeDate |
| SWAP | TimeData,2,3 |
| RETURN | TimeDate |
| END: | |

| |
|---|
| **12: Random Print Sequence Example: Print Lottery Tickets** |

Allows the print to print from 000 to XXXXXXXX randomly.

Ensuring that only one of each number is printed.

| | | |
|---|---|---|
| START: | | |
| VAR | SequenceStart | |
| VAR | SequenceJump | |
| VAR | SequenceOffset | |
| VAR | SequenceMax | |
| VAR | SavedSequence | |
| | | |
| | | |
| SET | SequenceJump,"BANZAI" | |
| SET | SequenceMax,"ZZZZZZ" | |
| SET | SequenceOffset,0 | |
| SET | SequenceStart,0 | |
| SET | %SYSTEMZEROCHAR,"A" | // Tell system A = 0 |
| SET | %SYSTEMBASE,26 | // put in Base 26 (A-Z) |
| | | |
| RESTART: | | |
| SET | SavedSequence,SequenceOffset | |
| | | |
| // Now Calculate next sequence number. | | |
| | | |
| SEQADD | SequenctOffset,SequenceJump | |
| JGT | SequenctOffset, SequenceMax, RESTARTCOUNTER | |
| SET | %StartPoint, RESTARTCOUNTER | |
| FORMATSERIAL | SavedSequence | |
| RETURN | SavedSequence | |
| | | |
| RESTARTCOUNTER: | | |
| ADD | SequenceStart,1 | |
| JGE | SequenceStart,SequenceJump,FINISHED | |
| SET | SequenceOffset,SequenceStart | |
| SET | %StartPoint,RESTARTCOUNTER | |
| FORMATSERIAL | SavedSequence | |
| RETURN | SavedSequence | |
| | | |
| FINISHED: | | |
| SYSTEM | STOP | |
| END: | | |

While the examples illustrated above rely upon triggering of variables by the printer clock, it is envisaged that the inventive method can also include external triggering in the script management.

It will thus be appreciated that the present invention, at least in the case of the working embodiment described, provides a facility having the following key features:
i) Scripts are created on a PC Tool and are only human-readable on that PC Tool. Existing Scripts can be loaded into this tool for further editing or viewing. The PC Tool will not be able to read the Compiled Script. Compiled Scripts shall not be converted back to human-readable form.
ii) Scripts have compulsory Statements to define Script Description Information. The PC Tool does not generate Compiled Scripts for a Script if these Statements are missing.
iii) The PC Tool provides Compiled Scripts which can be transferred to a printer via a USB key using the printers Configuration Update menus. The printer only looks for specific file extensions, in a specific location of the USB key. The printer performs checking on these Compiled Scripts to ensure that they are valid and will not transfer Compiled Scripts which fail these checks.
iv) The Printer's Editor allows the selection of Compiled Scripts for inclusion in a message. The Printer shall not provide the ability to view the Statements within the Compiled Script.
v) In the Editor Selection Screen for inserting Compiled Scripts, the list of available Compiled Scripts only shows Compiled Scripts that contain valid Script Description Information.
vi) The Compiled Scripts do not travel within a Message. Messages contain Compiled Script Fields which contain a reference to a specific Compiled Script. A matching Compiled Script must be transferred between printers (with a Message) to allow the Message to be used on both Printers.
vii) One software library file is generated containing both the Script Compiler and the Script Processor. This library file is called the Script Engine. This library can be used by other applications in the future.

### Glossary

| **Term** | **Definition** |
|---|---|
| **Script** | A Script is a short text based document that is edit and compiled by a PC Tool to produce a Compiled Script. |
| **CIJ** | Continuous Ink Jet |
| **Compiled Script** | Script files are converted into a machine readable form which can be used by the processor in the printer. This converted format is called the Compiled Script. |
| **DOD** | Drop on Demand |
| **Script Description Information** | When a Script is compiled, the Compiled Script will be populated with Description Information which can be used by the printer to differentiate between Compiled Scripts. |
| | This Script Description Information contains: Preview Output; Date of Compilation; Script Description; Script Compiler Revision Number |
| **Preview Output** | This is a series of text characters which is provided by the author of the Script. It shows an example of the output from the Script. |
| **Date of Compilation** | The date on which the PC Tool generated a Compiled Script. |
| **Script Description** | This is a series of text characters which will appear within the Editor's picking list when selecting Compiled Scripts. |
| **Script Compiler Version Number** | The Script Compiler which produces a Compiled Script shall have a unique version number. For future proofing, as the Script Compiler evolves to give more functionality, the printer will be able to check whether it's own software can support the functionality being requested in the Compiled Script. |
| **Script Reference** | The Message in the Editor or Message Store which contains a Compiled Script field does not embed the Compiled Script into the Message. The Message field will contain a reference to the Compiled. Script. This reference will be the filename of the Compiled Script. |
| **Deadlock** | Deadlock is where the Compiled Script fails to complete execution within a defined period of time. The logic in the Compiled Script will have an error which means that the execution does not terminate. |
| **Statement** | A Statement is a textual description in a Script indicating a single operation to be carried out by the printer's Script Processor. |
| **Function** | The author of a script is able to perform logical and arithmetic operations with the Statements provided in the Script. There are some operations which are commonly used and so are provided to the author within the Script language. These are called Functions and will return a defined value e.g. there will be a Function which will return the current Printer time. |
| **Variable** | An object can be created in the Script which can be manipulated during the execution of the Script. Once created, the contents are remembered from one Statement to the next, can be manipulated within those Statements, and logical operations can be made based on the content of those objects. These objects are called variables. For example: a variable representing a counter can be created which contains a number. It is initially given the value of 1. Statements in the Script can manipulate the contents of this variable, such as incrementing it. |
| **System Setting** | These are values which are used by the Script Functions. Their content is defined by their use in the associated Function. The author can use or manipulate the contents of these System Settings. |
| **Script Compiler** | This is a section of software which converts the human readable Script into a "compiled" format which is understandable by the processor in the printer i.e. it produces the Compiled Script. |
| **Script Execution** | This is the action of stepping through each of the operations in the Compiled Script and performing the necessary action required for that operation. The conclusion of the execution will be: an error in one of the operations; the execution fails to terminate; an operation produces the output to be placed into a message field; the script finished without populating the message field. |
| **Script Processor** | This is the sub-component which executes the Compiled Script. |
| **Script Engine** | The software for the Script Compiler and Script Processor is created as a software library for use across multiple applications. This library is called the Script Engine. |
| **Text Character** | An individual symbol representing a letter of the alphabet, a number or special characters, such as +, -, @, etc. The available Text Characters are taken from the Unicode definition of characters. |

## Claims

1. A marking apparatus (650) for applying a message to an article (504), the apparatus comprising:
a processor (654) arranged to generate a print message by executing one or more message scripts to calculate dynamic fields of the print message; and;
means (678) for applying the print message to an article;
the apparatus **characterised by** further comprising an input (672) for allowing a user to select the one or more message scripts to be executed by the processor to generate the print message.

2. An apparatus according to any one of the preceding claims, in which said apparatus is arranged to receive said one or more message scripts from a source external to said apparatus.

3. An apparatus according to any one of the preceding claims, in which each of the one or more message scripts is in a machine-readable format, the processor being arranged to execute said machine-readable format.

4. An apparatus according to claim 1 or claim 2, in which each of the one or more message scripts is in a human-readable format, the processor being arranged to execute said one or more message scripts by executing an interpreter for interpreting said human-readable format.

5. An apparatus according to any one of the preceding claims, the apparatus further comprising a clock, wherein at least one of the message scripts is arranged to cause the processor to use the output of the clock to calculate a dynamic field of the print message.

6. An apparatus according to any one of the preceding claims, wherein the apparatus is arranged to receive a print trigger and, in response to the print trigger, generate the print message and apply the print message to an article.

7. An apparatus according to any one of the preceding claims, in which said apparatus comprises an input for receiving data from a source external to said apparatus, wherein at least one of the message scripts is arranged to cause the processor to use the received data to calculate a dynamic field of the print message.

8. A system comprising:
a marking apparatus according to claim 7; and
a data source external to said marking apparatus and arranged to provide data to said marking apparatus via said input for receiving data from a source external to said marking apparatus for use in calculating a dynamic field of the print message.

9. A system according to claim 8, in which the data source comprises a sensor for determining one or more properties of the article.

10. A method for operating an apparatus for applying a message to an article, the method comprising:
allowing a user to select one or more message scripts to be executed, by a processor of the apparatus, to generate a print message;
generating the print message by executing, by the processor, the one or more message scripts to calculate dynamic fields of the print message; and
applying the print message to an article.

11. A computer program which, when executed by a processor, carries out the method according to claim 10.

12. A method of enhancing the capability of marking and/or coding apparatus operated in accordance with claim 10, said method including creating the one or more message scripts to be applied by said apparatus, including forming said one or more message scripts using a scripting language providing a user with logic and field operations.

13. A method as claimed in claim 12 wherein said scripting language is applied external to said marking and/or coding apparatus.

14. A method as claimed in claim 12 or claim 13 wherein said one or more message scripts are compiled into machine-readable form and transferred to an operating system of said marking and/or coding apparatus.

15. A method as claimed in any one of claims 12 to 14 wherein said message is created on a computer remote from said apparatus and transferred by way of a USB key.

## Patentansprüche

1. Markiervorrichtung (650) zum Aufbringen einer Nachricht auf einen Gegenstand (504), wobei die Vorrichtung Folgendes aufweist:
einen Prozessor (654), der dazu ausgestaltet ist, eine Drucknachricht durch Ausführen von einem oder mehreren Nachrichtenskripts zu erzeugen, um dynamische Felder der Drucknachricht zu berechnen; und
ein Mittel (678) zum Aufbringen der Drucknachricht auf einen Gegenstand;
wobei die Vorrichtung **dadurch gekennzeichnet ist, dass** sie ferner einen Eingang (672) aufweist, um einem Nutzer zu ermöglichen, das eine oder die mehreren von dem Prozessor auszuführenden Nachrichtenskripte auszuwählen, um die Drucknachricht zu erzeugen.

2. Vorrichtung nach einem der vorhergehenden Ansprüche, wobei die Vorrichtung dazu ausgestaltet ist, das eine oder die mehreren Nachrichtenskripte von einer Quelle, die extern der Vorrichtung ist, zu empfangen.

3. Vorrichtung nach einem der vorhergehenden Ansprüche, wobei jedes des einen oder der mehreren Nachrichtenskripte in einem maschinenlesbaren Format vorliegt, wobei der Prozessor dazu ausgestaltet ist, das maschinenlesbare Format auszuführen.

4. Vorrichtung nach Anspruch 1 oder Anspruch 2, wobei jedes des einen oder der mehreren Nachrichtenskripte in einem menschenlesbaren Format vorliegt, wobei der Prozessor dazu ausgestaltet ist, das eine oder die mehreren Nachrichtenskripte durch Ausführen eines Interpretierprogramms zum Interpretieren des menschenlesbaren Formats auszuführen.

5. Vorrichtung nach einem der vorhergehenden Ansprüche, wobei die Vorrichtung ferner eine Uhr aufweist, wobei mindestens eines der Nachrichtenskripte dazu ausgestaltet ist, zu verursachen, dass der Prozessor die Ausgabe der Uhr dazu verwendet, ein dynamisches Feld der Drucknachricht zu berechnen.

6. Vorrichtung nach einem der vorhergehenden Ansprüche, wobei die Vorrichtung dazu ausgestaltet ist, einen Druckauslöseimpuls zu empfangen, und, ansprechend auf den Druckauslöseimpuls, die Drucknachricht zu erzeugen und die Drucknachricht auf einen Gegenstand aufzubringen.

7. Vorrichtung nach einem der vorhergehenden Ansprüche, wobei die Vorrichtung einen Eingang zum Empfangen von Daten von einer Quelle aufweist, die extern der Vorrichtung ist, wobei mindestens eines der Nachrichtenskripte dazu ausgestaltet ist, zu verursachen, dass der Prozessor die empfangenen Daten dazu verwendet, ein dynamisches Feld der Drucknachricht zu berechnen.

8. System, das Folgendes aufweist:
eine Markiervorrichtung nach Anspruch 7; und
eine Datenquelle, die extern der Markiervorrichtung ist und dazu ausgestaltet ist, Daten für die Markiervorrichtung über den Eingang zum Empfangen von Daten von einer Quelle, die extern der Markiervorrichtung ist, zur Verwendung bei der Berechnung eines dynamischen Felds der Drucknachricht bereitzustellen.

9. System nach Anspruch 8, wobei die Datenquelle einen Sensor zum Bestimmen von einer oder mehreren Eigenschaften des Gegenstands aufweist.

10. Verfahren zum Betreiben einer Vorrichtung zum Aufbringen einer Nachricht auf einen Gegenstand, wobei das Verfahren Folgendes aufweist:
Ermöglichen, dass ein Nutzer ein oder mehrere von einem Prozessor der Vorrichtung auszuführende Nachrichtenskripte auswählt, um eine Drucknachricht zu erzeugen;
Erzeugen der Drucknachricht durch Ausführen, durch den Prozessor, des einen oder der mehreren Nachrichtenskripte zur Berechnung von dynamischen Feldern der Drucknachricht; und
Aufbringen der Drucknachricht auf einen Gegenstand.

11. Computerprogramm, das, wenn es von einem Prozessor ausgeführt wird, das Verfahren nach Anspruch 10 ausführt.

12. Verfahren zur Verbesserung der Fähigkeit der Markier- und/oder Codiervorrichtung, die in Übereinstimmung mit Anspruch 10 betrieben wird, wobei das Verfahren ein Erstellen des einen oder der mehreren Nachrichtenskripte, die von der Vorrichtung aufzubringen sind, einschließt, was ein Bilden des einen oder der mehreren Nachrichtenskripte unter Verwendung einer Skriptsprache, die Logik- und Feld-Vorgänge für einen Nutzer bereitstellt, einschließt.

13. Verfahren nach Anspruch 12, wobei die Skriptsprache extern der Markier- und/ oder Codiervorrichtung aufgebracht wird.

14. Verfahren nach Anspruch 12 oder Anspruch 13, wobei das eine oder die mehreren Nachrichtenskripte in eine maschinenlesbare Form übersetzt werden und an ein Betriebssystem der Markier- und/oder Codiervorrichtung übertragen werden.

15. Verfahren nach einem der Ansprüche 12 bis 14, wobei die Nachricht auf einem Computer erstellt wird, der entfernt von der Vorrichtung ist, und mithilfe eines USB-Schlüssels übertragen wird.

## Revendications

1. Appareil de marquage (650) pour appliquer un message à un article (504), l'appareil comprenant :
un processeur (654) agencé pour générer un message d'impression en exécutant un ou plusieurs script(s) de message pour calculer des champs dynamiques du message d'impression ; et ;
un moyen (678) pour appliquer le message d'impression à un article ;
l'appareil étant **caractérisé en ce qu'**il comprend en outre une entrée (672) pour permettre à un utilisateur de sélectionner le ou les plusieurs script(s) de message à exécuter par le processeur pour générer le message d'impression.

2. Appareil selon l'une quelconque des revendications précédentes, dans lequel ledit appareil est agencé pour recevoir ledit ou lesdits plusieurs script(s) de message à partir d'une source externe audit appareil.

3. Appareil selon l'une quelconque des revendications précédentes, dans lequel chacun du ou des plusieurs script(s) de message est dans un format lisible par machine, le processeur étant agencé pour exécuter ledit format lisible par machine.

4. Appareil selon la revendication 1 ou 2, dans lequel chacun du ou des plusieurs script(s) de message est dans un format lisible par l'homme, le processeur étant agencé pour exécuter ledit ou lesdits plusieurs script(s) de message en exécutant un interpréteur pour interpréter ledit format lisible par l'homme.

5. Appareil selon l'une quelconque des revendications précédentes, l'appareil comprenant en outre une horloge, où au moins l'un des scripts de message est agencé pour amener le processeur à utiliser la sortie de l'horloge pour calculer un champ dynamique du message d'impression.

6. Appareil selon l'une quelconque des revendications précédentes, dans lequel l'appareil est agencé pour recevoir un déclencheur d'impression et, en réponse au déclencheur d'impression, pour générer le message d'impression et appliquer le message d'impression à un article.

7. Appareil selon l'une quelconque des revendications précédentes, dans lequel ledit appareil comprend une entrée pour recevoir des données à partir d'une source externe audit appareil, où au moins l'un des scripts de message est agencé pour amener le processeur à utiliser les données reçues pour calculer un champ dynamique du message d'impression.

8. Système comprenant :
un appareil de marquage selon la revendication 7 ; et
une source de données externe audit appareil de marquage et agencée pour fournir des données audit appareil de marquage via ladite entrée pour recevoir des données à partir d'une source externe audit appareil de marquage pour une utilisation dans le calcul d'un champ dynamique du message d'impression.

9. Système selon la revendication 8, dans lequel la source de données comprend un capteur pour déterminer une ou plusieurs propriété(s) de l'article.

10. Procédé de fonctionnement d'un appareil pour appliquer un message à un article, le procédé comprenant le fait :
de permettre à un utilisateur de sélectionner un ou plusieurs script(s) de message à exécuter, par un processeur de l'appareil, pour générer un message d'impression ;
de générer le message d'impression en exécutant, par le processeur, le ou les plusieurs script (s) de message pour calculer des champs dynamiques du message d'impression ; et
d'appliquer le message d'impression à un article.

11. Programme informatique qui, lorsqu'il est exécuté par un processeur, met en oeuvre le procédé selon la revendication 10.

12. Procédé d'amélioration de la capacité d'un appareil de marquage et/ou de codage actionné selon la revendication 10, ledit procédé comportant le fait de créer le ou les plusieurs script(s) de message à appliquer par ledit appareil, comportant le fait de former ledit ou lesdits plusieurs script(s) de message en utilisant un langage de script fournissant à un utilisateur des opérations de logique et de champ.

13. Procédé tel que revendiqué dans la revendication 12, dans lequel ledit langage de script est appliqué à l'extérieur dudit appareil de marquage et/ou de codage.

14. Procédé tel que revendiqué dans la revendication 12 ou 13, dans lequel ledit ou lesdits plusieurs script(s) de message est/sont compilé(s) sous une forme lisible par machine et transféré(s) à un système d'exploitation dudit appareil de marquage et/ou de codage.

15. Procédé tel que revendiqué dans l'une quelconque des revendications 12 à 14, dans lequel ledit message est créé sur un ordinateur éloigné dudit appareil et transféré au moyen d'une clé USB.
